# EUROPEAN PATENT APPLICATION

(11) **EP 4 647 149 A1**
(43) Date of publication of application: **12.11.2025**
(21) Application number: 24174751.8
(22) Date of filing: 08.05.2024
(51) Int. Cl.: B01D 67/00, B01D 69/02, B01D 71/02

(54) **DEVICE FOR FILTERING PARTICLES FROM A FLUID AND A METHOD FOR MANUFACTURING THE DEVICE**

(71) Applicant: Stichting IMEC Nederland, 5656 AE Eindhoven (NL)
(72) Inventor: SURAN, Swathi, 5504 EV Veldhoven (NL); LINDEBOOM, Lucas, 5212 BT 's-Hertogenbosch (NL); LANGEREIS, Geert, 5611 HX Eindhoven (NL); WIERINGA, Fokko, 6661 RE Elst (NL)
(74) Representative: AWA Sweden AB

(57) **Abstract**

According to an aspect of the present inventive concept there is provided a device for filtering particles from a fluid, comprising: a silicon-based membrane comprising a first surface and a second surface, pores extending through a thickness of the membrane from the first surface to the second surface, wherein at least walls of the pores have an electric surface charge, and wherein the silicon-based membrane is configured to receive a flow of the fluid on the first surface and to transport the particles from the first surface to the second surface; and a coating extending at least along the walls of the pores, wherein the coating comprises at least one layer of an polyelectrolyte, the polyelectrolyte adhering at least to the walls of the pores by an electric charge of the polyelectrolyte being opposite to the electric surface charge and thereby reversing the electric surface charge.

## Description

### Technical field

The present description relates, in general, to devices for filtering particles from a fluid. The present description may also relate to a method for manufacturing a device for filtering particles from a fluid.

### Background

A filter is a device that separates particles from a fluid. The filter may comprise a membrane, wherein pores extend through the membrane.

For several applications, membranes having small pores are needed. Moreover, the pores may need to be charge exclusive. Depending on the application, the membrane may need to be anti-fouling and bio compatible, limiting the suitable materials for the membrane. The process of etching pores with a small diameter is sensitive to processing parameters.

Moreover, in some applications, as for instance using the membrane in artificial kidney for filtering blood, there is a large risk of fouling and hence clogging when having small pores in known membranes.

Thus, there is a need in the art for improvements.

### Summary

It is an objective of the present description to provide a filter of high quality. It is a further objective of the present description to provide a highly selective filter. It is an objective of the present description to provide a filter with anti-fouling properties. It is a further objective to provide a filter suitable for filtering in-body fluids.

It is a further objective of the present description to provide a device structure with small pore sizes and highly controllable pore sizes, wherein the device structure may be used for any purpose.

These and other objectives are at least partly met by the invention as defined in the independent claims. Preferred embodiments are set out in the dependent claims.

According to a first aspect, there is provided a device for filtering particles from a fluid, the device comprising:
a silicon-based membrane comprising a first surface and a second surface, the second surface being opposite to the first surface, the membrane further comprising pores extending through a thickness of the membrane from the first surface to the second surface, wherein at least walls of the pores have an electric surface charge, and wherein the silicon-based membrane is configured to receive a flow of the fluid on the first surface and to transport the particles from the first surface, through the pores, to the second surface; and
a coating extending at least along the walls of the pores, wherein the coating comprises at least one layer of a polyelectrolyte, the polyelectrolyte adhering at least to the walls of the pores by an electric charge of the polyelectrolyte being opposite to the electric surface charge and thereby reversing the electric surface charge.

The particles may be middle molecular weight particles from the blood flow. Thus, the particles may be particles having a molecular weight from 500 to 58 000 Dalton. In other words, the particles may be toxins, including creatinine, urea, glucose, and ions. The particles may as well be toxic metals in water, PFAS and other unwanted particles in water. When the device is used for filtering particles from the blood flow, the particles may specifically not be proteins as for instance albumin. Instead, proteins like albumin are kept in the fluid while other particles as those mentioned above are filtered through the membrane.

The fluid may be any fluid. The fluid may for instance be blood. The fluid may be water, such as water from a water treatment plant. The fluid may be a gas such as oxygen or carbon dioxide.

Thus, the device may be used in several different applications and for filtering different kinds of particles from different kinds of fluids.

An advantage of the device of the first aspect is that it is highly adaptable for different kind of applications. Thus, the device may be adapted such that it is especially suitable for filtering the specific particles form the specific liquid of the specific application. The adaptation may be made during production, thus it is an advantage that the line of production for the device may be the same independent of the application.

Thanks to the device comprising a coating at least along the walls of the pores, a size of the pores may be very accurately controlled by providing walls of the pores with one or more layers of polyelectrolyte. The number of layers may be selected in dependence of the desired pore size to be provided.

In particular, using a silicon-based membrane, pores may be formed in the silicon-based membrane in a very well-controlled manner, for instance using conventional semiconductor processing technology. This implies that the silicon-based membrane may be provided with monodisperse pores, i.e., pores having an equal size. The pores may be initially formed with a size that is not sufficiently small for providing desired filtering properties. However, thanks to the coating along the walls of the pores, the size of the pores may be controlled to the desired size. The coating may be provided in an accurately controlled manner, such that the number of layers is controlled. Further, each layer has a well-defined thickness. Hence, the device provides accurate control of pore size based on an initial pore size in the silicon-based membrane and a selected number of layers being provided in the coating along the walls of the pores.

This implies that the device may be provided with very small-size pores while still providing accurate control of the size throughout the membrane. Thus, each pore may be very similar in size and shape.

For instance, the device may be provided with pores having a diameter of 4-6 nm, which corresponds to pore size of a natural kidney. This facilitates providing a device having similar functionality to a natural kidney and the device may therefore be advantageously used in an artificial kidney.

The silicon-based membrane may comprise at least one layer of a material including silicon. However, it should be realized that the material need not be based on pure silicon but may include further elements.

Thus, the silicon-based membrane may comprise a semiconductor, e.g. a semiconductor wafer or a semiconductor layer.

The silicon-based membrane may comprise any SiOₓ

The silicon-based membrane may comprise Si, polycrystalline Si, SiO₂, Si₃N₄, or SiNx.

The membrane may be an ultrathin silicon-based membrane. As such, it may be an ultrathin nanoporous silicon-based membrane.

The silicon-based membrane may have a large extension along a first surface of the membrane and may have a small thickness perpendicular to the first surface. The silicon-based membrane comprises the first surface and a second surface. The second surface is opposite to the first surface. The silicon-based membrane may be formed by a homogeneous material, such that a silicon-based material is provided at the first surface and the second surface. However, if required the first surface and/or the second surface may comprise a different material as compared to the silicon-based material.

It should be understood that the silicon-based membrane comprising the first surface and the second surface may be one single block of material.

The membrane further comprises pores, extending through a thickness of the membrane from the first surface to the second surface.

The pores may extend through the silicon-based membrane in a direction orthogonal to the first surface, wherein a second end of the pore is arranged at the second side of the silicon-based membrane. Such a pore may be termed a vertical pore.

The pores may have a circular shape or a slit shape. Thus, the shape of the pores may as well be adapted to the specific application of the device.

At least walls of the pores have an electric surface charge. The electric surface charge may be positive or negative. The electric surface charge of at least the walls of the pores may be adapted to the application of the device. The electric surface charge of at least the walls of the pores may be adapted to the coating of choice. At least the walls of the pores may be electrically activated to reach the electric surface charge of choice. This may be done by using plasma, piranha or a combination thereof.

The silicon-based membrane is configured to receive a flow of the fluid on the first surface and to transport the particles from the first surface, through the pores, to the second surface.

Thus, the pores are adapted to transport particles through the thickness of the membrane, from the first side of the membrane to the second side of the membrane.

Importantly, the membrane is configured such that the pores may be adapted to transport the particles through the membrane while other constituents of the fluid are not transported through the pores.

The device further comprises a coating. The coating is extending at least along the walls of the pores. The coating comprises at least one layer of an polyelectrolyte and the polyelectrolyte is adhering at least to the walls of the pores by an electric charge of the polyelectrolyte being opposite to the electric surface charge and thereby reversing the electric surface charge.

The coating allows for adapting the pore size for the specific application. Thus, when smaller particles are to be filtered through the device, the coating may be used to shrink the diameter of the pores.

An advantage of this is that the pores through the membrane may be made using well-known techniques in a larger size than required and yet the final pore will have a smaller dimension thanks to the coating of the walls of the pores. Thus, the coating is used to fine-tune the dimensions of the pore.

The coating comprises at least one layer, thus it may comprise several layers. The layer facing the inside of the pore, being the one single layer or the outermost layer of a plurality of layers, is used to determine the electric surface charge facing the fluid which is transported through the pore.

Thus, by having the opposite electric surface charge as compared to the walls of the pore, the adhesion of the coating to the wall of the pore is easily made and in addition, the electric surface charge facing the fluid which is transported through the pore is opposite compared to the walls of the pores.

In other words, the coating may be built based on electrostatic interactions, whereby layers of the coating are adsorbed on to the walls of the pores.

After coating, at least the walls of the pores may be hydrophilic. An advantage of this is that it may enhance the fluid to flow through the pores. The hydrophilicity may also keep foulants away providing an anti-fouling effect to the device.

The electric surface charge of the coating may increase the anti-fouling properties of the membrane. Thus, it is an advantage of the present invention that fouling of particles in the pores may be decreased due to the properties of the coating. This means that the device may be used for filtering of particles during long-term use without clogging of the pores.

It is a further advantage to repel ions of the same charge as the surface charge. Thus, those particles will not be filtered through the membrane. For instance, a healthy kidney has a negative charge, keeping the negatively charges albumin from being filtered through the kidney. This is true also for the membrane.

According to one embodiment the electric surface charge of at least the walls of the pores may be a negative charge.

This may be provided by a native oxide layer on a silicon surface. Thus, a silicon-based membrane may inherently be provided with a thin oxide layer providing a negative electric surface charge. Further, the surface may be activated by plasma treatment, piranha treatment or a combination thereof to reach a negative surface charge.

The negative charge may allow for a positive coating of a single layer coating facing the inside of the pores, such that the inside of the pores facing the fluid is positive. In this way, positively charged constituents of the fluid may not pass through the pore.

However, it should be realized that the electric surface charge of at least the walls of the pores may be a positive charge. In that case, the single layer coating of the walls of the pores may be a negative coating. In that case, if the layer of the coating facing the inside of the pore is negative, negatively charged constituents of the fluid will not pass though the pore.

According to one embodiment the device may comprise a plurality of layers of polyelectrolytes, wherein the electric charge of the plurality of layers of polyelectrolytes may be reversed for each layer.

Thus, the coating may comprise two or more layers of polyelectrolytes. Each layer may have different electric charge, such that the electrical charge changes by every layer. An advantage of this is that the thickness of the coating can be finetuned by choosing the number of layers. Moreover, the charge of the layer facing the inside of the pore, thus the electric surface charge facing the fluid which is transported through the pore, may be chosen such that it suits the purpose of the application.

For instance, one positive polyelectrolyte and one negative polyelectrolyte may be called a bilayer. A stack of bilayers called polyelectrolyte multi-layer may be made and can be of any thickness that is desired. The number of layers or number of bi-layers may depend on the starting dimension of the pore and the required final pore size.

According to one embodiment the coating may further extend along the first surface of the silicon-based membrane.

Thus, the coating may extend from the first surface of the silicon-based membrane and extend further into and along the side walls of the pore. The first surface of the silicon-based membrane may in that case have an electric surface charge, such that the coating may adsorb to the first surface by the differences in the surface charge. In other words, the electric surface charge of the walls of the pore may be the same surface charge along the first surface of the silicon-based membrane.

An advantage of this is that the absorbance of the coating is better if the coating extends along the first surface as well as along the walls of the pores. A further advantage is that the anti-fouling effect of the coating is enhanced, when the coating extends along the first surface since the constituents of the fluid which are not supposed to be transported through the pores are less likely to do so when also the first surface is coated.

According to one embodiment the molecular weight of the polyelectrolyte may be smaller than a molecular weight cut-off of the pores.

The molecular weight cut-off of the pores may be determined by the application of the device. The cut-off should be set such that particles of interest can be transported through the pores, while other particles are retained in the non-filtered part.

The choice of the molecular weight of the polyelectrolytes used determines the kind of closure (shape and size) provided to the pores.

Choosing polyelectrolytes of molecular weight smaller than the desired molecular weight cut-off of the membrane allows conformal coating of the at least one layer along at least the walls of the pores. Such a coating on the membrane falls under the pore-dominated regime which does not allow the complete closure of the pores. Thus, the pore size shrink, but is still kept open enough for the particles to be transported through the pore.

According to one embodiment the pore size may be 10 nm - 50nm, preferably 10-25 nm, more preferably 13-20 nm in diameter and wherein the coating may have a thickness of less than half of the size of the pore, such that the coating may shrink the distance between surfaces of opposite sides of the pore to 2-10 nm.

Thus, the pore size may be different depending on the application for the device. Further, the thickness of the coating may be adapted such that the final size of the pore opening fits the application of the device.

When the desired pore diameter is reached, or almost reached, a last layer of polyelectrolytes may be deposited to set the desired electric surface charge of the layer facing the fluid transported through the pores.

Further, the pore may have a circular, oval or slit shape.

The pore size may be a lateral distance across the pore, i.e. a lateral distance across the pore in a direction parallel with the first surface. The pore size may be the smallest lateral distance across the pore. As an example, for a pore in the shape of a round hole, the pore size may be the diameter of the round hole. As another example, for a pore in the shape of a slit, the pore size may be the width of the slit.

It is a realization that a coating of the desired thickness may not swell in contact with fluids. Thus, the pore will be remained open during long term use.

According to one embodiment the polyelectrolyte may comprise polyallylamine hydrochloride, PAH, polyacrylic acid, PAA, poly(acrylic acid sodium salt, PAA⁻ NA⁺, poly(diallyldimethylammonium chloride solution, PDDAC, and/or poly (sodium-4-styrene sulfonate), PSS.

The polyelectrolyte may be chosen such that the electric charge is opposite to the electric charge of at least the walls of the pore. Moreover, the coating may comprise different polyelectrolytes. Thus, if a plurality of layers of polyelectrolytes are used, the electric charge of each of the layers are alternatingly reversed and thus alternating layers are made of different polyelectrolytes.

For instance, a combination of polyallylamine hydrochloride, a positive polyelectrolyte, with polyacrylic acid and/or poly (sodium-4-styrene sulfonate, is a weak and strong negative polyelectrolyte, respectively.

According to one embodiment the layer of coating facing an inside of the pore may have a larger molecular weight than layers of the coating closer to the pore wall.

Thus, the layer facing the fluid being transported through the pore may have longer molecular chains or being a negative polyelectrolyte. This may for instance be used when the device is to be used as a membrane for mimicking a kidney. By this, particles that are not to be filtered through the membrane are more easily prevented from passing through the pore.

According to one embodiment the fluid may be blood.

Thus, the device may be used to filter blood e.g. as a dialysis device for purifying blood and/or as a device forming an artificial kidney to be implanted in a body.

The particles may then be water, ions, small molecular weight molecules, β2m, inulin or leptin, while other constituents of the blood, like albumin and red blood cells, are not filtered through the device and then kept in the blood stream.

When filtering blood, the pore size may need to be small, as many components of blood are small. Thus, it is an advantage of the present description that the pore size is adaptable and may be small.

According to a second aspect, there is provided an artificial kidney comprising the device according to the first aspect.

This aspect may generally present the same or corresponding advantages as the former aspect.

Highly efficient filtering of middle molecular weight molecules from the blood flow, while retaining the useful protein albumin in the blood, is an important aim strived towards in development of artificial kidneys. An advantage of the present description is that the pore size and the electric surface charge, providing the anti-fouling effect, can be adapted to the properties of the blood and the needs for an artificial kidney.

The development of ultrathin nanoporous Si-membranes facilitates providing membranes for an implantable artificial kidney. The present description provides a solution to finetune the pore size of any silicon-based membrane and at the same time increase the anti-fouling properties of such a device. Further, in the human body the glomerular filtration is governed by the glomerular pressures and the intrinsic fixed negative charges on the walls of the glomerular capillaries and basement membrane. The coating may be adapted to mimic this function.

Thus, it is a realization that the device according to the first aspect may provide a blood filter with a thinner membrane, smaller pore sizes, and more uniform pore size distribution than a traditional hemodialysis filter.

In a traditional hemodialysis filter, hollow polymer fibers form the pores of the membrane. A traditional hemodialysis filter generally comprises a membrane which can be as thick as several microns. A traditional hemodialysis filter generally has tortuous pores in a diffuse Gaussian size distribution, and a limited fill-factor (open pore area per area unit of the membrane) thereby slowing average diffusion time. This leads to the need for a high-power blood pump to drive the filter process, while blood filtration remains relatively ineffective. Also, either toxins near the size of albumin remain in a patient's blood (with smaller molecular size cut-off membranes), or loss of albumin and other critical proteins occur (with larger molecular size cut-off membranes). It is a realization that both scenarios are highly undesirable, and that a very steep size cut-off is advantageous. This can be achieved with highly uniformly and very adaptable sized pores, as advantageously provided by the device according to the present description.

When the device according to the present description is used as a hemodialysis filter, the device may be arranged such that the flow of fluid received on the first surface is the impure blood. A dialysate solution may then be present on the side facing the second surface of the silicon-based membrane.

The device according to the present description may even be used as an implantable or semi-implantable device. Thus, the membrane may be placed inside the body. In such case, the regular blood pressure may be used to force the blood against the membrane such that it may be filtered.

Some components of the blood, like albumin molecules and/or other protein molecules, may then be too large to pass through the pores while other components of the blood (like impurities such as urea, creatinine, ions such as sodium, potassium, and phosphate, as well as excess water) may diffuse into the dialysate solution. Thereby, the impure blood may be purified.

Thus, according to an aspect, there is provided an implantable device comprising the device according to the first aspect. The implantable device may be used for providing filtering of blood but may alternatively be used for providing filtering of another body fluid.

According to another aspect, there is provided a water filtration device comprising the device according to the first aspect.

This aspect may generally present the same or corresponding advantages as the former aspect.

In a water treatment plant, several stages of water filtration is commonly made. A primary treatment may remove large constituents, while further treatment stages have the purpose of removing smaller constituents like particles.

In recent years, the availability of clean water has been reduced in many places and clean water has become a finite resource. To counteract the lack of clean water, and the larger need for reuse of water, more efficient water treatment plants are needed.

An advantage of the present description is that an efficient water treatment may be made while still keeping the device small. Thus, the device may be used in places where the space is limited.

According to another aspect, there is provided a method for manufacturing a device for filtering particles from a fluid, the method comprising:
depositing a coating to extend at least along walls of pores, the pores extending through a thickness of a silicon-based membrane from a first surface to a second surface of the silicon-based membrane, wherein at least the walls of the pores have an electric surface charge, wherein the coating comprises at least one layer of an polyelectrolyte, the polyelectrolyte adhering at least to the walls of the pores by an electric charge of the polyelectrolyte being opposite to the electric surface charge and thereby reversing the electric surface charge.

This aspect may generally present the same or corresponding advantages as the former aspect.

The method facilitates manufacturing of a device for filtering particles having a small membrane thickness, a small pore size and a highly controllable pore size.

The method allows for manufacturing of a device which is highly adaptive to the application it is to be used for. The electric surface charge of the pores may be chosen by the electric surface charge of at least the walls of the pores in combination with the at least one layer of polyelectrolyte coating.

Moreover, the method allows for shrinking the size of the pore without affecting the silicon-based membrane.

The polyelectrolyte coating is deposited such that it conformally extends along at least the walls of the pores. The polyelectrolyte coating is deposited as a solution, thus the solution forming the polyelectrolyte coating is deposited such that it conformally extends along at least the walls of the pores.

The polyelectrolyte adsorbs to at least the walls of the pores by the difference in electric surface charge between the walls of the pores and the coating solution.

According to one embodiment the depositing may be made using pressure deposition.

An advantage of using pressure deposition is that the coating solution is forced into the pores, such that the extension of the coating along the walls of the pores allows for the entire walls to be covered by the coating. The deposition method may also be vacuum deposition, having the same advantages as pressure deposition.

As an alternative, immersion of the membrane into the coating solution may be used. In that case, the capillary forces of the pores may pull the coating into the pores.

According to one embodiment a plurality of layers of polyelectrolytes may be deposited at least along walls of pores, wherein the electric charge of the plurality of layers of polyelectrolytes may change for each layer.

Thus, the deposition may be repeated until a desired thickness and electric surface charge of the coating is reached. When the desired thickness of the coating is almost reached, the electric surface charge of the coating is controlled such that a last layer may be deposited to reach the desired electric surface charge.

The deposition of a plurality of layers is a self-limiting process. When all surface charges of one layer is fully covered by the next layer, no more polyelectrolytes can attach. This is true thanks to the change of the electric charge by every layer.

One positive polyelectrolyte and one negative polyelectrolyte may be called a bilayer. A stack of bilayers called polyelectrolyte multi-layer may be made and can be of any thickness that is desired. The number of layers or number of bi-layers may depend on the starting dimension of the pore and the required final pore size.

According to one embodiment the method may further comprise rinsing each of the plurality of layers before depositing the next layer.

The rinsing allows for removing extra, i.e. loosely bound, polyelectrolyte, after the self-limiting process has stopped. Thus, when all electric charge is bound to the next layer the rinsing allows for removing any extra polyelectrolyte.

According to one embodiment the depositing of the coating may be made such that the coating further extends along the first surface of the silicon-based membrane.

Thus, the first surface of the silicon-based membrane may have an electric surface charge which may be used to adsorb at least one layer of coating along the first surface of the silicon-based membrane.

An advantage of this is that the absorbance of the coating is better if the coating extends along the first surface as well as along the walls of the pores. A further advantage is that the anti-fouling effect of the coating is enhanced, when the coating extends along the first surface since the constituents of the fluid which are not supposed to be transported through the pores are less likely to do so when also the first surface is coated.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a side view of a device.
Fig. 2 is a side view of a device.
Fig. 3 is a flowchart of a method.
Fig. 4 is a side view of a device.

### Detailed description

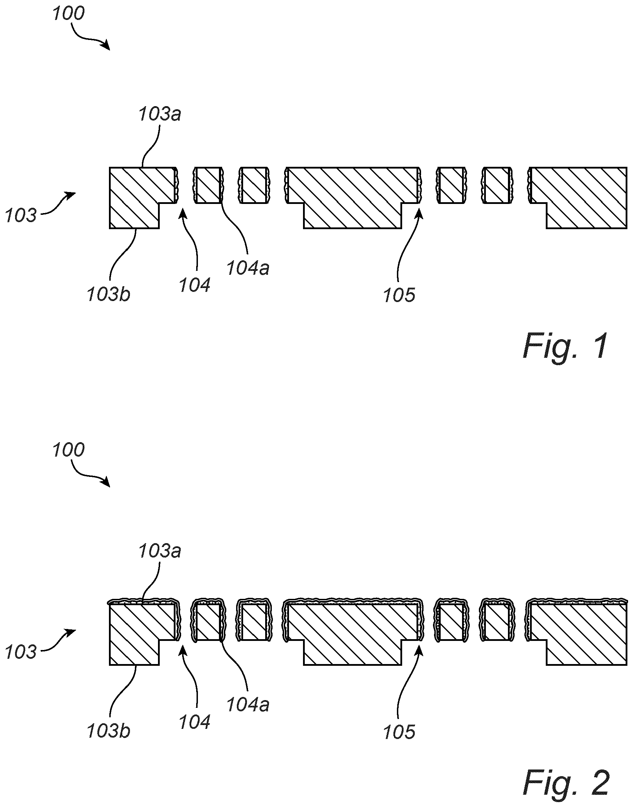

Fig. 1 illustrates a side view of a device 100 for filtering particles 101 from a fluid 102. The fluid 102 may be blood. The fluid 102 may be water. The particles 101 may be water, ions, small molecular weight molecules, β2m, inulin or leptin.

The device 100 may be used in several different applications and for filtering different kinds of particles 101 from different kinds of fluids 102.

The device 100 comprises a silicon-based membrane 103. Thus, the silicon-based membrane 103 may comprise a semiconductor, e.g. a semiconductor wafer or a semiconductor layer. The silicon-based membrane 103 may comprise any SiOₓ. The silicon-based membrane may 103 comprise polycrystalline Si, SiO₂, Si₃N₄, or SiNx. The membrane 103 may be an ultrathin silicon-based membrane 103. As such, it may be an ultrathin nanoporous silicon-based membrane 103.

The silicon-based membrane 103 comprises a first surface 103a.

The silicon-based membrane 103 comprises a second surface 103b. The second surface 103b is opposite to the first surface 103a.

The silicon-based membrane 103 may be formed by a homogeneous material, such that a silicon-based material is provided at the first surface 103a and the second surface 103b. However, if required the first surface 103a and/or the second surface 103b may comprise a different material as compared to the silicon-based material.

The membrane 103 further comprises pores 104 extending through a thickness t of the membrane 103, from the first surface 103a to the second surface 103b. The pores 104 may have a circular shape or a slit shape.

The pore size may be 10 nm - 50nm, preferably 10-25 nm, more preferably 13-20 nm in diameter. The membrane 103 may be monodisperse such that the pore size of all of the pores is equal or at least within manufacturing tolerances.

At least walls 104a of the pores 104 have an electric surface charge. The electric surface charge of at least the walls 104a of the pores 104 may have a negative charge. This may be formed by a native oxide layer. The negative charge may allow for a positive coating facing the inside of the pores 104, such that the inside of the pores 104 facing the fluid 102 is positive. The electric surface charge of at least the walls 104a of the pores 104 may be a positive charge. In that case, the coating of the walls 104a of the pores 104 may be a negative coating.

The pores 104 may extend through the membrane 103 such that the walls 104a of the pores 104 is formed by the material of the silicon-based membrane 103.

The silicon-based membrane 103 is configured to receive a flow of the fluid 102 on the first surface 103a and to transport the particles 101 from the first surface 103a, through the pores 104, to the second surface 103b.

The transportation of the particles 101 through the pores 104, may be made by diffusion or by pressure from the flow of the fluid 102 towards the first surface 103a.

The device 100 further comprises a coating 105. The coating 105 extends at least along the walls 104a of the pores 104.

The coating 105 comprises at least one layer of a polyelectrolyte.

The polyelectrolyte adsorbed at least to the walls 104a of the pores 104 by an electric charge of the polyelectrolyte being opposite to the electric surface charge and thereby reversing the electric surface charge. The molecular weight of the polyelectrolyte may be chosen such that it is smaller than a molecular weight cut-off of the pores 104.

The coating 105 may have a thickness of less than half of the size of the pore, such that the coating 105 may shrink the distance between surfaces of opposite sides of the pore to 2-10 nm.

The polyelectrolyte may comprise polyallylamine hydrochloride, PAH, polyacrylic acid, PAA, poly(acrylic acid sodium salt, PAA⁻ NA⁺, poly(diallyldimethylammonium chloride solution, PDDAC, and/or poly (sodium-4-styrene sulfonate), PSS.

The coating 105 facing an inside of the pore has a larger molecular weight than coatings 105 closer to the pore wall 104a.

Fig. 2 illustrates a side view of a device 100 for filtering particles 101 from a fluid 102. The device 100 comprises many similarities with Fig. 1, which for reasons of simplicity will not be discussed.

The device 100 comprises a plurality of layers of polyelectrolytes, wherein the electric charge of the plurality of layers of polyelectrolytes is reversed for each layer.

Thus, the coating 105 may comprise two or more layers of polyelectrolytes. Each layer may have different electric charge, such that the electrical charge changes by every layer.

For instance, one positive polyelectrolyte and one negative polyelectrolyte may be called a bilayer. A stack of bilayers called polyelectrolyte multi-layer may be made and can be of any thickness that is desired. The number of layers or number of bi-layers may depend on the starting dimension of the pore and the required final pore size.

Moreover, in the device of Fig. 2, the coating 105 is further extending along the first surface 103a of the silicon-based membrane 103.

The coating 105 extends in this case from the first surface 103a of the silicon-based membrane 103 and along the side walls 104a of the pore 104. The first surface 104a of the silicon-based membrane 104a may in that case have an electric surface charge, such that the coating 105 may adsorb to the first surface 103a by the differences in the surface charge. In other words, the electric surface charge of the walls 104a of the pore 104 may be the same surface charge as along the first surface 103a of the silicon-based membrane 103.

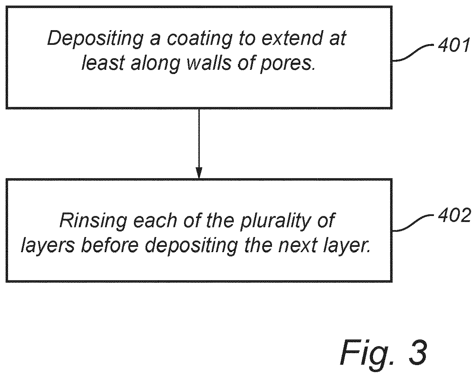

Fig. 3 illustrates a method 400 for manufacturing a device 100 for filtering particles 101 from a fluid 102.

The method 400 comprises depositing 401 a coating 105 to extend at least along walls 104a of pores 104. The pores 104 are extending through a thickness of a silicon-based membrane 103 from a first surface 103a to a second surface 103b of the silicon-based membrane 103.

The deposition 401 may be made using pressure deposition, meaning that the coating 105 is forced into the pores 104, such that the extension of the coating 105 along the walls 104a of the pores 104 allows for the entire walls to be covered by the coating. The deposition 401 method may also be vacuum deposition, having the same advantages as pressure deposition.

As an alternative, immersion of the membrane 103 into the coating 105 may be used. In that case, the capillary forces of the pores 104 may pull the coating 105 into the pores 104.

At least the walls 104a of the pores 104 have an electric surface charge. The coating 105 comprises at least one layer of a polyelectrolyte.

The polyelectrolyte adsorbes at least to the walls 104a of the pores 104 by an electric charge of the polyelectrolyte being opposite to the electric surface charge and thereby reversing the electric surface charge.

The coating 105 may comprise a plurality of layers of polyelectrolytes being deposited at least along walls 104a of pores 104. The electric charge of the plurality of layers of polyelectrolytes changes for each layer.

Thus, the deposition 401 may be repeated until a desired thickness and electric surface charge of the coating 105 is reached. When the desired thickness of the coating is almost reached, the electric surface charge of the coating is controlled such that a last layer may be deposited to reach the desired electric surface charge.

The deposition 401 of a plurality of layers is a self-limiting process. When all surface charges of one layer is fully covered by the next layer, no more polyelectrolytes can attach. This is true thanks to the change of the electric charge by every layer.

The method 400 may further comprise rinsing 402 each of the plurality of layers before depositing the next layer. The rinsing removes extra polyelectrolyte, after the self-limiting process has stopped.

The deposition 401 of the coating 105 may be made such that the coating 105 further extends along the first surface 103a of the silicon-based membrane 103.

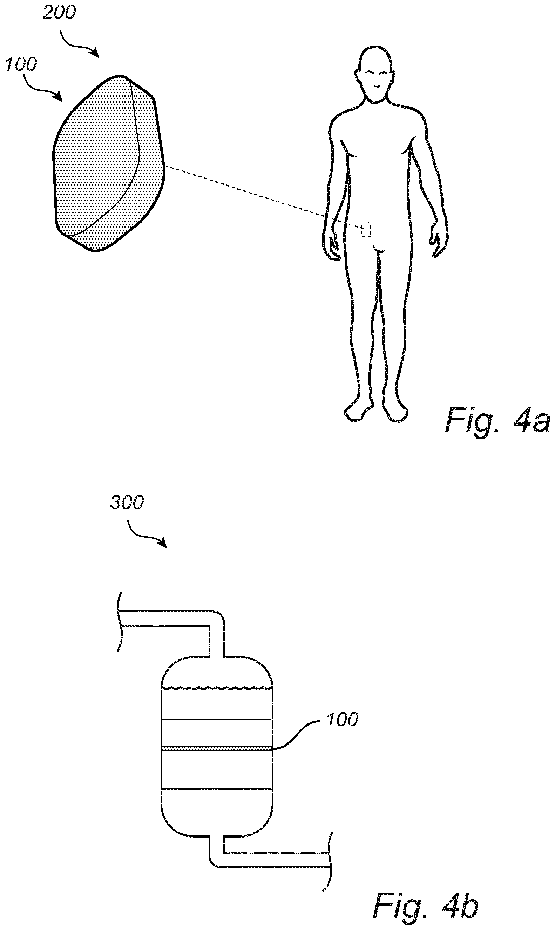

The device 100 according to any one of Figs. 1 or 2, or a device 100 manufactured by the method 400 according to Fig. 3, may be comprised in an artificial kidney 200 as illustrated in Fig 4a.

Following is an example of the function of an artificial kidney 200 comprising the device 100.

Starting from a silicon-based membrane 103 having pores with a diameter of 20 nm, the coating 105 comprising polyelectrolytes are deposited by pressure deposition 401 on the silicon-based membrane 103 by a layer-by-layer mechanism on the silicon-based membrane 103. The first layer of the coating 105 is adsorbed to the silicon-based membrane 103 based on electrostatic interactions by adsorption to the first surface 103a membrane. Depending on the charge of the surface, the polyelectrolytes conformally coats the first surface 103a and the walls 104a of the pores 104. A polyelectrolyte of opposite charge of the first layer can then follow deposition on the first layer to form a bilayer. This process is repeated to achieve the desired thickness of the coating 105 in the pores 105 and on the first surface 104a.

The choice of the molecular weight of the polyelectrolytes used determines the kind of closure one would have over the pores 104. In this example, a polyelectrolyte having a molecular weight being smaller than the molecular weight cut-off of the pores 104. In other words, the molecular weight of the polyelectrolytes is smaller than the molecular weight of the largest particle 101 intended to pass through the pores 104.

The polyelectrolytes may or instance be polyallylamine hydrochloride, having a positive electric surface charge in combination with polyacrylic acid, and/or poly (sodium-4-styrene sulfonate), PSS having a weak and strong negative electric surface charge, respectively.

This allows for the assembly of polyelectrolytes along the first surface 103a of the silicon-based membrane 103 and the walls 104a of the pores 104 without closing the pore diameters. Once the desired shrinking of the pores 104 is achieved, the surface of the polyelectrolytes is terminated with a negative polyelectrolyte which will repel polyanions like albumin and enhanced filtering of polycations. Other bigger molecules like the blood cells are also retained in the blood without being filtered through the pores 104. Water, ions and small molecular weight molecules pass through the pores 104 by diffusion due to concentration gradient. Whereas at low pressures, like that of blood pressures, middle molecular weight molecules (500- 60kDa) like β2m, inulin, leptin and other molecules filter through the pores 104 while retaining essential proteins like albumin.

Albumin is expelled by the pore size criterion assisted by the negative surface charge of the polyelectrolyte whereas neutral and cationic molecules of similar molecular weight are filtered through. Such a permselective capability is advantageous when mimicking a kidney.

Moreover, the polyelectrolyte coating 105 may not swell in physiological fluid pH conditions, allowing the pores 104 to remain open when in contact with fluids. Even further, the membrane 103 has anti-fouling properties when larger molecular weight polyelectrolytes are deposited at the first surface 103a and at the walls 104a of the pores 104. The uncompensated long hanging chains act as negatively charged brushes to ward off foulants at the surface.

The device 100 according to any one of Figs. 1 or 2, or a device 100 manufactured by the method 400 according to Fig. 3, may be comprised in a water filtration device 300 as illustrated in Fig 4b.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (100) for filtering particles (101) from a fluid (102), the device (100) comprising:
a silicon-based membrane (103) comprising a first surface (103a) and a second surface (103b), the second surface (103b) being opposite to the first surface (103a), the membrane (103) further comprising pores (104) extending through a thickness (t) of the membrane (103) from the first surface (103a) to the second surface (103b), wherein at least walls (104a) of the pores (104) have an electric surface charge, and wherein the silicon-based membrane (103) is configured to receive a flow of the fluid (102) on the first surface (103a) and to transport the particles (101) from the first surface (103a), through the pores (104), to the second surface (103b); and
a coating (105) extending at least along the walls (104a) of the pores (104), wherein the coating (105) comprises at least one layer of an polyelectrolyte, the polyelectrolyte adhering at least to the walls (104a) of the pores (104) by an electric charge of the polyelectrolyte being opposite to the electric surface charge and thereby reversing the electric surface charge.

2. A device (100) according to claim 1, wherein the electric surface charge of at least the walls (104a) of the pores (104) is a negative charge.

3. A device (100) according to anyone of claims 1 or 2, wherein the device (100) comprises a plurality of layers of polyelectrolytes, wherein the electric charge of the plurality of layers of polyelectrolytes is reversed for each layer.

4. A device (100) according to any one of claims 1 to 3, wherein the coating (105) is further extending along the first surface (103a) of the silicon-based membrane (103).

5. A device (100) according to any one of claims 1 to 4, wherein the molecular weight of the polyelectrolyte is smaller than a molecular weight cut-off of the pores (104).

6. A device (100) according to any one of claims 1 to 5, wherein the pore size is 10 nm - 50nm, preferably 10-25 nm, more preferably 13-20 nm in diameter and wherein the coating (105) has a thickness of less than half of the size of the pore, such that the coating (105) shrinks the distance between surfaces of opposite sides of the pore to 2-10 nm.

7. A device (100) according to any one of claims 1 to 6, wherein the polyelectrolyte comprises polyallylamine hydrochloride, PAH, polyacrylic acid, PAA, poly(acrylic acid sodium salt, PAA⁻ NA⁺, poly(diallyldimethylammonium chloride solution, PDDAC, and/or poly (sodium-4-styrene sulfonate), PSS.

8. A device (100) according to any one of claims 3 to 7, wherein the layer of the coating (105) facing an inside of the pore has a larger molecular weight than layers of the coating (105) closer to the pore wall (104a).

9. A device (100) according to any one of claims 1 to 8, wherein the fluid (102) is blood.

10. An artificial kidney (200) or implantable device comprising the device (100) according to any one of the preceding claims.

11. A water filtration device (300) comprising the device (100) according to any one of claims 1-8.

12. A method (400) for manufacturing a device (100) for filtering particles (101) from a fluid (102), the method comprising:
depositing (401) a coating (105) to extend at least along walls (104a) of pores (104), the pores (104) extending through a thickness of a silicon-based membrane (103) from a first surface (103a) to a second surface (103b) of the silicon-based membrane (103), wherein at least the walls (104a) of the pores (104) have an electric surface charge, wherein the coating (105) comprises at least one layer of an polyelectrolyte, the polyelectrolyte adhering at least to the walls (104a) of the pores (104) by an electric charge of the polyelectrolyte being opposite to the electric surface charge and thereby reversing the electric surface charge.

13. The method according to claim 12, wherein the depositing (401) is made using pressure deposition.

14. The method according to any one of claims 12 or 13, wherein a plurality of layers of polyelectrolytes are deposited at least along walls (104a) of pores (104), wherein the electric charge of the plurality of layers of polyelectrolytes changes for each layer.

15. The method according to claim 14, wherein the method (400) further comprises
rinsing (402) each of the plurality of layers before depositing the next layer.
